# EUROPÄISCHE PATENTSCHRIFT

(11) **EP 0 399 344 B1**
(45) Veröffentlichungstag und Bekanntmachung des Hinweises auf die Patenterteilung: **24.11.1993**
(21) Anmeldenummer: 90109191.8
(22) Anmeldetag: 16.05.1990
(51) Int. Cl.: F16K 11/052

(54) **Ventil**
Valve
Vanne

(30) Priorität: 23.05.1989 NO 892053
(43) Veröffentlichungstag der Anmeldung: 28.11.1990
(73) Patentinhaber: Ehrenberg, Henry, Senator h.c., D-75438 Knittlingen (DE)
(72) Erfinder: Lie, Amund, N-2670 Otta (NO)
(74) Vertreter: Patentanwälte Ruff, Beier, Schöndorf und Mütschele

(56) Entgegenhaltungen:
- DE-B- 1 024 299
- FR-A- 2 381 954
- US-A- 1 858 246
- US-A- 2 856 952

## Beschreibung

Die Erfindung betrifft ein Ventil, insbesondere ein Mehr-Wege-Ventil.

Aus der DE-C-2 536 995 ist ein Klappenventil bekannt geworden, dessen symmetrische Klappe quer durch den Ventilkanal hindurchragt. Der Außenumfang der Klappe wirkt mit einer den Ventilkanal umgebenden Dichtung zusammen. Diese Ventile sind insbesondere für die Nahrungsmittelindustrie sehr vorteilhaft, weil sie z. B. durch Spülen leicht zu reinigen sind. Sie sind jedoch nur als Absperr- bzw. Drosselventile einsetzbar.

Aus der DE-A-3 612 672 ist eine Mehrwege-Schaltarmatur bekannt geworden, die eine schwenkbare Klappe in einem zylindrischen Gehäuse aufweist, in den vier Anschlußkanäle münden. Die symmetrische Klappe kann jeden Anschlußkanal wahlweise mit den ihm benachbarten Anschlußkanälen verbinden. Diese Schaltarmatur ist nicht allgemein einsetzbar, weil sie keine definierte Schließstellung hat.

Aus der gattungsgemäßen US-A-28 56 952 ist ein Drei-Wege-Ventil bekanntgeworden, bei dem in einem Gehäuse ein Ventilraum gebildet ist, zu dem drei Anschlußkanäle führen. Im Ventilraum ist eine schwenkbare Verschlußklappe vorgesehen, die mit ihrem Außenumfang wahlweise mit den Dichtflächen an einem Dichtungskörper zusammenwirken kann. Der Dichtungskörper bildet eine Auskleidung für den Ventilraum. Das Gehäuse ist wannenförmig ausgebildet und wird durch einen Deckel verschlossen, durch den die Klappenachse ragt.

Die FR-A-23 81 954 beschreibt ein Vier-Wege-Ventil mit einer in einer Ventilkammer zentrisch angeordneten Ventilklappe. Die Ventilkammer wird nach außen teilweise von segmentartigen Abschnitten begrenzt, die jeweils einen Anschlußkanal enthalten und Flansche haben, die über ein Zwischenstück gegeneinander geschraubt werden können. Sie schließen dabei Dichtungsstege zwischen sich ein. Die Achsen der Ventilklappe ragen durch hier eine gesonderte obere und untere Platte mit einer gesonderten Dichtung hindurch, während die zwischen den Flanschen angeordneten, gesonderten Dichtungsstege mit dem übrigen Teil des Klappenumfanges zusammenarbeiten. Diese Einrichtung hat sehr viele gesondert herzustellende und zu montierende Einzelteile.

Aufgabe der Erfindung ist die Schaffung eines Ventils, das die Nachteile des Standes der Technik vermeidet, insbesondere universeller einsetzbar, mit geringem Aufwand herstellbar und leicht zu reinigen ist.

Diese Aufgabe wird durch das Ventil gemäß den Merkmalen von Anspruch 1 gelöst. Die Vorteile des Klappenventils, seine einfache Bedienbarkeit und Reinigungsmöglichkeit werden beibehalten und die Anwendungsmöglichkeiten beträchtlich erweitert.

Durch den Aufbau des Ventilgehäuses aus identischen Teilelementen, die in ihrer Zahl der Zahl der Anschlußkanäle entsprechen und von denen jeder einen Anschlußkanal enthält ist die Herstellung rationell möglich. An den Trennlinien kann die Dichtung verlaufen und durch Einspannen dort festgehalten sein und diese abdichten. Ein Dreiwege-Ventil ist also aus nur fünf Hauptteilen, nämlich drei Gehäusesegmenten, einem Ventilkörper und einem Dichtungselement herstellbar.

Als Dichtungsmittel dient ein zusammenhängender ring-käfigartiger Dichtungskörper, der so viele Stege wie Anschlußkanäle aufweist, die von zwei zentralen Kreuzungspunkten ausgehen, durch die die Ventilklappenachse abgedichtet hindurchragt. Entsprechend den Anforderungen sind hier Abwandlungen möglich. Beispielsweise brauchte die Klappenachse auf einer Seite nicht durch die Dichtung hindurch zu laufen und könnte ggf. in ihr gelagert sein. Es wäre auch möglich, gesonderte Dichtringe für jeden Anschlußkanal und die Klappenachse einzusetzen, obwohl der einheitliche Dichtungskörper sowohl bauliche als auch betriebliche Vorteile hat. Auch Dichtungen am Ventilkörper wären möglich. Die Dichtungsanordnung am Gehäuse hat aber den Vorteil, daß sie auch die Gehäuseteile gegeneinander abdichtet.

Durch eine gegenüber der Achse exzentrisch angeordnete Klappe kann ein Mehrwege-, insbesondere ein Dreiwege-Ventil geschaffen werden, das durch eine Schwenkung des Ventilkörpers wahlweise die Anschlußkanäle miteinander verbindet und dabei auch als Absperrventil für zumindest je einen Kanal dienen kann. Zugleich kann eine Drosselstellung eingestellt werden und bevorzugt kann der Ventilkörper in eine Reinigungsstellung gebracht werden, in der der gesamte Ventilkörper, soweit er überhaupt im Ventilraum liegt, von allen Seiten her umspült werden kann. Dabei kann der Ventilkörper so eingestellt werden, daß die Spülflüssigkeit auch einen nicht im Spülflüssigkeitsdurchstrom liegenden Kanalabschnitt durchströmen kann.

Der Ventilkörper ist vorzugsweise so ausgebildet, daß er mit Dichtmitteln, die am Umfang des Ventilraums angeordnet sind und diesen nicht einzuengen brauchen, nur mit seinem äußeren Randbereich an der von der Klappenachse entfernten Seite des Ventilkörpers zusammenwirkt. Dadurch wird eine definierte Dichtungs-Gegenfläche geschaffen, während der übrige Verschlußabschnitt der Klappe entsprechend den jeweiligen Forderungen geformt sein kann. Vorzugsweise ist er zwar etwas gewölbt, jedoch flacher als es einem Rotationskörper um die Achse entsprechen würde, so daß er bei der Ventilbetätigung von der Dichtung frei läuft und diese nicht zu überstreichen braucht. Diese Verschlußabschnittsfläche unterliegt daher auch keinen besonderen Anforderungen an ihre Präzision und Oberflächengüte. Ferner wird dadurch dafür gesorgt, daß in einer Zwischenstellung sowohl die Dichtflächen der Dichtung als auch der gesamte Ventilkörper zur Reinigung frei liegt.

Obwohl die Ausbildung als Mehrwege-Ventil bevorzugt ist, läßt sich das Ventil auch für andere Zwecke, beispielsweise als Absperrventil einsetzen. In diesem Falle würde der exzentrisch angeordnete Ventilkörper im geöffneten Zustand des Ventils vor einen Wandabschnitt schwenken. Es bleibt der bei allen Ausführungen erreichte Vorteil erhalten, daß der Ventilkörper im geöffneten Zustand nicht durch den Durchgangsquerschnitt des Ventils hindurchragt und diesen einengt. Dieser Durchgangsquerschnitt ist völlig frei und braucht sich auch in seiner Querschnittsform kaum zu ändern. Dies sorgt für ein extrem niedrigen Durchflußwiderstand und Vorteile bei der Reinigung und beim Fördern von schwierigen Gütern, beispielsweise Faseraufschlemmungen etc., die zum Hängenbleiben am Ventilkörper neigen.

Ein Ausführungsbeispiel der Erfindung ist in den Zeichnungen dargestellt und wird im folgenden näher erläutert. In den Zeichnungen zeigen:
- Fig. 1 und 2: Seitenansicht und Draufsicht auf ein Dreiwege-Ventil,
- Fig. 3: einen Schnitt nach Linie III,
- Fig. 4 - 10: Ansichten und Schnitte nach den mit entsprechenden römischen Ziffern bezeichneten Schnittlinien durch eine Dichtung und einen Ventilkörper,
- Fig. 11: eine Explosionsdarstellung eines Dreiwege-Ventils,
- Fig. 12-14: Draufsicht auf ein Ventil mit verschiedenen Anordnungen von Anschlußstutzen und
- Fig. 15: ein Einbaubeispiel zweier Ventile.

Ein Drei-Wegeventil 11 besteht aus einem Ventilgehäuse 12, das aus drei identischen, segmentartigen Teilen 13 zusammengesetzt ist, einem ein Verschlußmittel bildenden, klappenartigen Ventilkörper 14 und einer Dichtung 15. Das Ventilgehäuse 12 ist ein mehrkantiger, jedoch in der Grundform fast kugeliger Block, der an drei jeweils um 120° gegeneinander versetzten Abflachungen 16 drei Anschlüsse 17 aufweist, die beispielsweise Anschweiß-Stege 18 aufweisen können. Die mit jedem Anschluß verbundenen Anschlußkanäle 19 sind kreisrund, sehr kurz und laufen zentral zur Mittelachse 20 des Ventils, wo sie in einem gemeinsamen Ventilraum 21 ineinander übergehen. Die drei Gehäuseteile 13 des Ventilkörpers liegen längs Trennflächen 22 aneinander an, in deren Bereich hinterschnittene Ausnehmungen 23 vorgesehen sind, in denen Stege 24 der Dichtung 15 mit T-förmigem Querschnitt festgelegt sind.

Die Dichtung 15 hat die Form eines aus drei unter 120° gegeneinander versetzten, im wesentlichen halbkreisförmig bzw. halbelliptisch gebogenen Stegen 24 zusammengesetzten Käfigs. Die Stege 24 treffen sich in zwei Kreuzungsbereichen 25, in denen sich Durchgangslöcher 26 befinden. Die Innenseiten 27 der Stege 24 sind ballig gewölbt und bilden eine mit dem Ventilkörper 14 zusammenwirkende Dichtfläche.

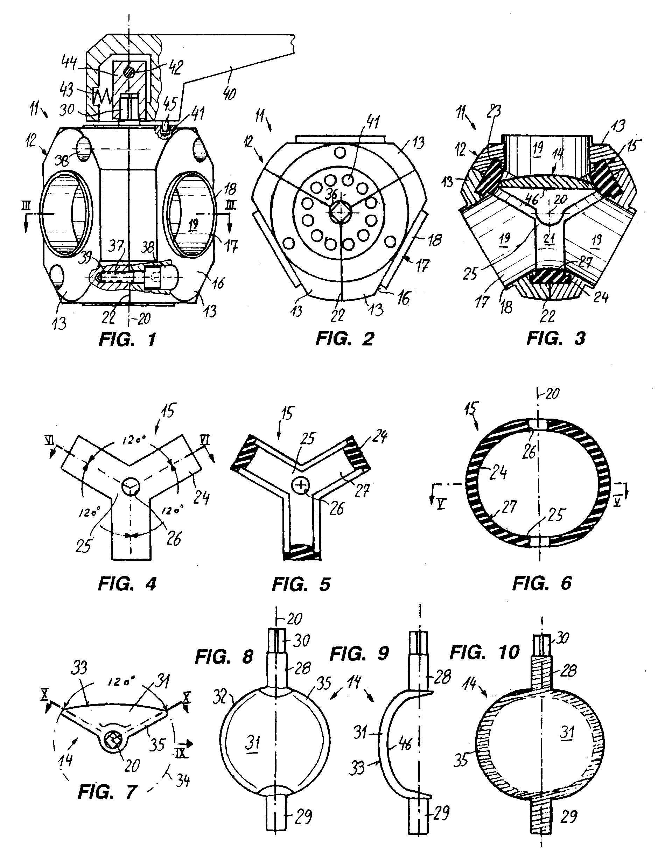

Die aus einem einheitlichen, einstückigen Formkörper aus Gummi oder elastischem Kunststoff bestehende Dichtung 15 (siehe insbesondere Fig. 4 - 6) ist im Bereich der Trennflächen 22 zwischen die Gehäuseteile 13 so eingefügt (Fig. 3), daß sie sich formschlüssig in den Ausnehmungen 23 hält. Die zusammengefügten Gehäuseteile 13 werden mit ihren Trennflächen 22 in Kontakt gebracht und die inneren Dichtungsflächen 27 bilden Verbindungsabschnitte zwischen den Anschlußkanälen 19, d. h. Wandabschnitte des Ventilraums 21. Die Dichtung dichtet gleichzeitig die Gehäuseteile, die Ventilkörperachse und den Ventilkörper im Schließzustand ab.

Der Ventilkörper 14 (Fig. 7 - 10) besteht aus zwei Wellenzapfen 28, 29, von denen der eine an seinem Ende eine Anschlußprofilierung (beispielsweise einen Vierkant) trägt. Zwischen den Achszapfen 28, 29 befindet sich ein Verschlußabschnitt 31, der gegenüber der Achse 20 seitlich versetzt ist und eine löffelartig gewölbte, genauer in den Figuren 7 - 10 dargestellte Form hat. Sie ist in einer Ansicht (Fig. 8) symmetrisch und kreisförmig, in der Ansicht senkrecht dazu bogenförmig gewölbt, jedoch mit einem geringeren Krümmungsradius als der Rand 32 in Fig. 8, so daß die Rückenfläche 33 in ihrer Mitte einen wesentlichen Abstand von einem gedachten Rotationskörper hat, den die Linie 32 beschreiben würde.

Fig. 7 zeigt, daß die Rückenfläche 33 wesentlich flacher ist als der Drehkreis 34 um die Achse 20.

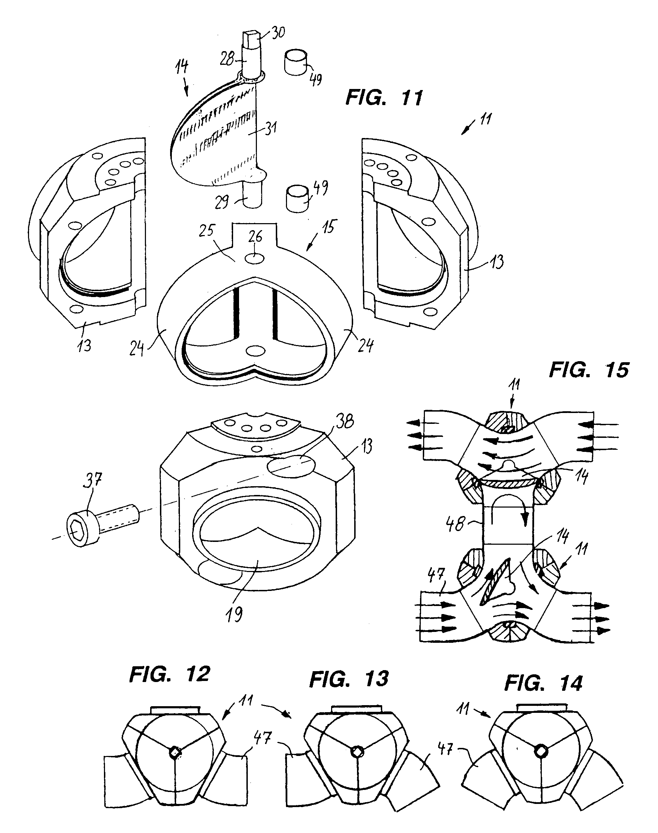

Bei der Ausführungsform hat der Ventilkörper einen Randbereich 35, der auf einem gedachten Rotationskörper um die Achse 20 liegt, und zwar bei kreisförmiger Ausführung der Anschlußkanäle und auf einer Kugelfläche. In diesem Bereich 35 arbeitet der Ventilkörper mit den Dichtflächen 27 des Ventilkörpers 15 zusammen, während alle übrigen Teile des Verschlußabschnittes 31 davon frei sind. Insgesamt liegen also nur die in Fig. 10 schraffierten Flächen an dem Dichtkörper an, nämlich die Achsstutzen 28, 29, die in den Löchern 26 dichtend geführt sind, und die Randbereiche 35.

Fig. 6 und 10 zeigen längs geknickten Schnittlinien geführte Schnitte von Dichtung und Ventilkörper. Sie zeigen, daß die Dichtungsstege 24 und die Randbereiche 35 in Wirklichkeit eine elliptische Form haben, da die Trennflächen 22 die kreisrunden Anschlußkanäle 19 schräg schneiden und damit elliptische Schnittflächen bilden. Diese Verhältnisse ändern sich mit der Zahl der Anschlußkanäle und damit den Winkeln zwischen den Gehäuseteilen. Ebenso könnten die beim Ausführungsbeispiel jedes Gehäuseteil zentral durchdringenden Anschlußkanäle auch unsymmetrisch angeordnet sein oder eine andere als eine Kreisform haben, wenn dies von den Anschlußbedingungen oder der Strömungsführung her günstiger ist.

Die Achszapfen 28, 29 durchdringen das Ventilgehäuse 12 in dem entsprechend ausgenommenen Zentrum 36, an dem sich die Gehäuseteile 13 treffen. Die Gehäuseteile sind durch Schrauben 37 zusammengehalten, die in Schraubenlöcher 38 eingesetzt und jeweils in Gewindebohrungen 39 des benachbarten Teils eingeschraubt sind. Die jeweils eine Trennlinie 22 durchdringenden zwei Schrauben 37 sind oberhalb und unterhalb der Ebene der Anschlußkanäle vorgesehen. Die Schrauben sind abwechselnd von der einen und der anderen Seite eingesetzt, so daß die Gehäuseteile nicht nur von ihrer Grundform, sondern auch bis ins letzte Detail identisch ausgebildet sein können.

An der Oberseite trägt das Ventilgehäuse einen Kranz von Löchern 41 zur Arretierung eines Handgriffs 40. Er ist gegen die Kraft einer Feder 43 um eine Achse 42 schwenkbar, die ein auf dem Anschlußprofil 30 sitzendes Anschlußteil 44 mit dem Handgriff verbindet, an dem eine Rastnase 45 vorgesehen ist, die in die Löcher 41 eingreifen kann.

Fig. 3 zeigt das Ventil in einer Stellung, in der es den oberen Anschlußkanal 19 verschließt, während die beiden unteren Anschlußkanäle miteinander verbunden sind. Es ist dabei zu erkennen, daß durch die zwar gewölbte, aber gegenüber einem Rotationskörper flachere Rückenfläche 33 des Verschlußabschnitts 31 das Ventil nur mit den Randbereichen 35 an den Dichtflächen 27 anliegt und auch beim Verschwenken des Ventilkörpers um die Achse 20 die Rückenfläche nicht an den Dichtflächen 27 entlang streifen muß. Die Innenfläche 46 des Verschlußabschnittes 31 kann, wie in Fig. 3 gezeigt, im Querschnitt im wesentlichen flach sein, jedoch auch eine gewisse Wölbung haben. In jedem Falle ist zu erkennen, daß der Durchflußquerschnitt des Ventils ein flacher Bogen ohne wesentliche Einschnürung oder Erweiterung ist, so daß der Durchflußwiderstand außerordentlich gering ist. Durch entsprechende Form des Ventilkörpers läßt sich dies den Erfordernissen anpassen.

Durch entsprechend gekrümmte Anschlußstücke 47 (Fig. 12 - 14) läßt sich das Ventil in Durchgangsleitungen sowie Leitungskrümmungen oder Abzweigen organisch anordnen. Die Ventilachse steht dabei jeweils quer zur Abzweigungsfläche und ist leicht zu bedienen. Die Bedienung erfolgt durch Anheben des Hebels 40, wodurch die Rastnase 45 aus den Löchern 41 freikommt und entsprechende Drehung. Außer den besonders gekennzeichneten drei Stellungen, in denen der Verschlußabschnitt 31 jeweils einen der Anschlußkanäle ganz verschließt, sind viele Zwischenstellungen möglich, in denen eine bestimmte Verteilung einer Strömung vorgenommen werden kann.

Aus Fig. 15 ist zu erkennen, daß in einer Zwischenstellung der Verschlußabschnitt 31 des Ventilkörpers von allen Seiten frei umströmt wird, so daß das Ventil durch Spülen ohne Demontage gereinigt werden kann. Dies kann auch geschehen, ohne den Betrieb in einem parallelen (hier oberen) Zweig zu unterbrechen. Im unteren Teil wird Reinigungsflüssigkeit von links herangeführt und umströmt den wie ein Ablenkkörper wirkenden Verschlußabschnitt 31 auf beiden Seiten, so daß auch in den Verbindungsrohrabschnitt 48 eine Spülströmung hinein und aus diesem auf der anderen Seite des Ventilkörpers vorbei wieder hinaus entstehen kann. Für Lebensmittelbetriebe, in denen diese Reinigung sehr häufig, meist täglich oder auch öfter geschehen muß, ist dies ein außerordentlicher Vorteil. Auch sonst hat das Ventil keinerlei unzugängliche Ecken, die Bakterienherde bilden könnten und keinen Totraum, da der Ventilraum 21 von einer Durchdringung der Ventilkanäle gebildet wird.

Fig. 11 zeigt, daß, falls erforderlich, außerhalb der Durchgangslöcher 26 durch die Dichtung 14 noch Führungsbuchsen 49 für die Achszapfen eingesetzt werden könnten. Meist ist dies nicht nötig. Durch die dann etwas elastische Lagerung des Ventilkörpers kann dieser sich gut an die Dichtflächen 27 anpassen. Durch den Innendruck im Ventil wird eine gewisse Selbstverstärkung des Ventilandruckes erreicht.

## Patentansprüche

1. Ventil mit einem einen Ventilraum (21) umschließenden Ventilgehäuse (12) und wenigstens drei zum Ventilraum führenden Anschlußkanälen (19), wobei im Ventilraum (21) ein um eine Achse (20) schwenkbares Verschlußmittel (14) vorgesehen ist, das durch Anlage an Dichtungsflächen eines Dichtungsmittels (15) mit dem Ventilgehäuse (12) zusammenwirkt, wobei das einstückig ähnlich einem kugeligen bzw. elliptischen Käfig ausgebildete Dichtungsmittel (15) mehrere gekrümmte Stege (24) aufweist, die je unter von 180° abweichenden Winkeln von zwei Kreuzungsbereichen (25) ausgehen, in denen wenigstens eine von der Achse (20) des Verschlußmittels abgedichtet durchdrungene Aufnahme (26) vorgesehen ist, dadurch gekennzeichnet, daß das Ventilgehäuse (12) aus in ihrer Anzahl der Zahl der Anschlußkanäle (19) entsprechenden und von diesen mittig durchsetzten gleichen, sich jeweils in einem die Achse (20) umgebenden Zentrum (36) treffenden Gehäuseteilen (13) zusammengesetzt ist, die aneinander anliegen und gegeneinander durch das Dichtungsmittel (15) abgedichtet sind.

2. Ventil nach Anspruch 1, dadurch gekennzeichnet, daß jeder Steg (24) des Dichtungsmittels (15) mit Ausnahme seiner Dichtflächen (27) von einer zwischen zwei benachbarten Gehäuseteilen (13) ausgebildeten, hinterschnittenen Ausnehmung (23) umschlossen aufgenommen ist.

3. Ventil nach Anspruch 1 oder 2, dadurch gekennzeichnet, daß das Verschlußmittel (14) einen gegenüber der Achse (20) exzentrisch angeordneten, klappenartigen Verschlußabschnitt (31) und vorzugsweise zwei miteinander fluchtende Achszapfen (28, 29 die über den Verschlußabschnitt (31) verbunden sind, aufweist, wobei sich der Verschlußabschnitt (31) mit einer vorzugsweise mittig abgeflachten Wölbung einseitig von der im Verschlußabschnittsbereich unterbrochenen Achse (20) erstreckt.

4. Ventil nach einem der vorhergehenden Ansprüche, dadurch gekennzeichnet, daß das Verschlußmittel (14) an seiner von der Achse (20) abgewandten Rückseite (33) einen mit dem Dichtungsmittel (15) zusammenwirkenden Dichtungs-Randbereich (35) aufweist, der vorzugsweise auf der Oberfläche eines gedachten, vorzugsweise kugeligen Rotationskörpers liegt, dessen Rotationsachse die Achse (20) des Verschlußmittels (14) ist, wobei vorzugsweise das Verschlußmittel (14) so geformt ist, daß der Randbereich (35) mit zwei benachbarten, unter einem Winkel kleiner als 180° gegeneinander versetzten Stegen (24) des Dichtungsmittels (15) zusammenwirkt, wobei ggf. die von der Achse (20) abgewandte Rückseite (33) des Verschlußmittels (14) in einem von dem Randbereich (35) umgebenen Flächenbereich insgesamt eine von der Achse (20) weg gewölbte, jedoch flachere Krümmung aufweist als ein gedachter Kreisbogen (34) um die Achse (20).

5. Ventil nach einem der vorhergehenden Ansprüche, dadurch gekennzeichnet, daß das Verschlußmittel (14) in einer zwei Anschlußkanäle (19) miteinander verbindenden Stellung Wandabschnitte der Anschlußkanäle zur Bildung eines gekrümmten Durchgangskanals mit im wesentlichen gleichem Strömungsquerschnitt wie die Anschlußkanäle (19) miteinander verbindet.

6. Ventil nach einem der vorhergehenden Ansprüche, dadurch gekennzeichnet, daß das Verschlußmittel (14) in eine Reinigungsstellung bringbar ist, in der der Verschlußabschnitt (31) mit seinen beiden Seiten (33, 46) und der Dichtungsrandbereich (35) von einem Durchgangsstrom umspülbar im Ventilraum (21) liegen, wobei vorzugsweise der Verschlußabschnitt (31) als Ablenkfläche in den Durchgangsstrom ragt.

7. Ventil nach einem der vorhergehenden Ansprüche, dadurch gekennzeichnet, daß der Ventilraum (21) durch eine Durchdringung der mit konstantem Querschnitt ausgeführten, vorzugsweise quer zur Achse (20) liegenden Anschlußkanäle (19), gebildet ist.

8. Ventil nach einem der vorhergehenden Ansprüche, dadurch gekennzeichnet, daß ein auf der Achse (20) angebrachter Betätigungshebel (40) eine Rasteinrichtung (45) aufweist, die mit Ausnehmungen (41), vorzugsweise einem Kranz von Bohrungen auf dem Ventilgehäuse (12) zusammenwirkt.

## Claims

1. Valve with a valve casing (12) surrounding a valve chamber (21) and at least three connecting channels (19) leading to the valve chamber (21), in which is provided a closure means (14) pivotable about an axis (20) and which cooperates with the valve casing (12) by engagement on sealing surfaces, the one-piece sealing means (15) constructed like a spherical or elliptical cage has several curved webs (24), which in each case emanate at angles diverging from 180° from two crossing areas (25), in which is provided at least one receptacle (26) sealingly penetrated by the axis (20) of the closure means, characterized in that the valve casing (12) is formed from casing parts (13) whose number corresponds to the number of connecting channels (19) are centrally traversed by the latter, are identical and in each case meet in a centre (36) surrounding the axis (20), said casing parts engaging on one another and being sealed against one another by the sealing means (15).

2. Valve according to claim 1, characterized in that each web (24) of the sealing means (15) with the exception of its sealing faces (27) is received in enclosed manner by an undercut recess (23) constructed between two adjacent casing parts (13).

3. Valve according to claim 1 or 2, characterized in that the closure means (14) has a flap-like closure portion (31) arranged eccentrically with respect to the axis (20) and preferably two aligned journals (28,29) connected via the closure portion (31), which extends with a preferably centrally flattened curvature on one side from the axis (20) which is interrupted in the closure portion area.

4. Valve according to one of the preceding claims, characterized in that the closure means (14) has on its back surface (33) remote from the axis (20) a sealing marginal area (35) cooperating with the sealing means (15) and which is preferably located on the surface of an imaginary, preferably spherical body of revolution, whose rotation axis is the axis (20) of the closure means (14), preferably the closure means (14) is shaped in such a way that the marginal area (35) cooperates with two adjacent webs (24) of the sealing means (15) which are reciprocally displaced by an angle of less than 180° and optionally a back surface (33) of the closure means (14) remote from the axis (20) in a surface area surrounded by the marginal area (35) has a flatter curvature than an imaginary arc (34) about the axis (20).

5. Valve according to one of the preceding claims, characterized in that the closure means (14) in a position interconnecting two passages (19) interconnects wall portions of the passages for forming a curved through passage with a substantially identical flow cross-section to the passages (19).

6. Valve according to one of the preceding claims, characterized in that the closure means (14) can be brought into a cleaning position, in which the closure portion (13) with its two sides (33,46) and the sealing marginal area (35) are located in the valve chamber (31) so that a through flow can pass round the same and preferably the closure portion (31) projects as a deflecting surface into the through flow.

7. Valve according to one of the preceding claims, characterized in that the valve chamber (21) is formed by a penetration of the connecting passages (19) having a constant cross-section and which are preferably at right angles to the axis (20).

8. Valve according to one of the preceding claims, characterized in that an operating lever (40) fitted to the spindle (20) has a locking mechanism (45), which cooperates with recesses (41), preferably a ring of bores on the valve casing (12).

## Revendications

1. Vanne comprenant un carter de vanne (12) qui entoure une chambre de vanne (21), et comprenant au moins trois canaux de raccordement (19) qui conduisent à la chambre de vanne, cependant qu'il est prévu dans la chambre (21) de la vanne un moyen de fermeture (14) qui peut pivoter autour d'un axe (20) et qui coopère avec le carter (12) de la vanne par appui sur des surfaces d'étanchéité d'un moyen d'étanchéité (15), et que le moyen d'étanchéité (15), lequel est conformé d'un seul tenant d'une manière analogue à une cage sphérique ou elliptique, respectivement, comporte plusieurs branches courbes (24) qui partent à chaque fois sous des angles différents de 180° de deux zones de croisement (25) dans lesquelles il est prévu au moins un logement (26) traversé d'une manière étanche par l'axe (20) du moyen de fermeture, caractérisée par le fait que le carter (12) de la vanne est composé de parties de carter (13) identiques dont le nombre correspond au nombre des canaux de raccordement (19), qui sont traversées en leur centre par ceux-ci, qui se rencontrent à chaque fois en un centre (36) entourant l'axe (20), qui portent les unes sur les autres et qui sont rendues étanches entre elles par le moyen d'étanchéité (15).

2. Vanne selon la revendication 1, caractérisée par le fait que chaque branche (24) du moyen d'étanchéité (15), à l'exception de ses surfaces d'étanchéité (27), est reçue par un évidement en contre-dépouille (23) qui l'entoure et qui est formé entre deux parties de carter voisines (13).

3. Vanne selon la revendication 1 ou 2, caractérisée par le fait que le moyen de fermeture (14) comporte une partie de fermeture (31) en forme de clapet qui est disposée d'une manière excentrée par rapport à l'axe (20) et, de préférence, deux tourillons (28, 29) qui sont alignés entre eux et qui sont reliés entre eux par l'intermédiaire de la partie de fermeture (31), la partie de fermeture (31) s'étendant, par une courbure de préférence aplatie en son centre, d'un côté de l'axe (20) qui est interrompu dans la région de la partie de fermeture.

4. Vanne selon l'une des revendications précédentes, caractérisée par le fait que le moyen de fermeture (14) comporte, sur son côté arrière (33) qui est opposé à l'axe (20), une zone de bord d'étanchéité (35) qui coopère avec le moyen d'étanchéité (15) et qui est située de préférence sur la surface d'un corps de révolution imaginaire, de préférence sphérique, dont l'axe de révolution est l'axe (20) du moyen de fermeture (14), cependant que le moyen de fermeture (14) est de préférence conformé d'une manière telle que la zone de bord (35) coopère avec deux branches voisines (24) du moyen d'étanchéité (15), lesquelles sont décalées les unes par rapport aux autres d'un angle inférieur à 180°, et que, le cas échéant, la face arrière (33) du moyen de fermeture (14) qui est opposée à l'axe (20) présente dans son ensemble, dans une zone superficielle entourée par la zone de bord (35), une courbure qui est courbée à l'opposé de l'axe (20), mais qui est plus plate qu'un arc de cercle imaginaire (34) tracé autour de l'axe (20).

5. Vanne selon l'une des revendications précédentes, caractérisée par le fait que le moyen de fermeture (14), dans une position reliant entre eux deux canaux de raccordement (19), relie entre elles deux parties de paroi des canaux de raccordement en vue de former un canal de passage coudé qui présente pour l'essentiel la même section transversale d'écoulement que les canaux de raccordement (19).

6. Vanne selon l'une des revendications précédentes, caractérisée par le fait que le moyen de fermeture (14) peut être amené dans une position de nettoyage dans laquelle la partie de fermeture (31) est située dans la chambre (21) de la vanne en pouvant être balayée par un courant circulant sur ses deux côtés (33, 46) et sur la région de bord d'étanchéité (35), la partie de fermeture (31) pénétrant de préférence dans le courant circulant pour servir de surface de déviation.

7. Vanne selon l'une des revendications précédentes, caractérisée par le fait que la chambre de vanne (21) est constituée par une pénétration des canaux de raccordement (19) qui sont réalisés en présentant une section transversale constante et qui sont de préférence situés transversalement par rapport à l'axe (20).

8. Vanne selon l'une des revendications précédentes, caractérisée par le fait qu'un levier d'actionnement (40) monté sur l'axe (20) comporte un dispositif d'encliquetage (45) qui coopère avec des évidements (41) constitués de préférence par une couronne de perçages et ménagés dans le carter (12) de la vanne.
